# NOUVEAU FASCICULE DE BREVET EUROPEEN

(11) **EP 0 682 615 B2**
(45) Date de publication et mention de la décision concernant l'opposition: **12.04.2000**
(45) Mention de la délivrance du brevet: 27.12.1996
(21) Numéro de dépôt: 94904689.0
(22) Date de dépôt: 19.01.1994
(51) Int. Cl.: B60T 13/68, B60T 8/36

(54) **ELECTROVALVE PNEUMATIQUE PROPORTIONNELLE**
PROPORTIONALES ELEKTROMAGNETISCH GESTEUERTES DRUCKLUFTVENTIL
ELECTRICALLY-OPERATED PROPORTIONAL PNEUMATIC VALVE

(30) Priorité: 12.02.1993 FR 9301565
(43) Date de publication de la demande: 22.11.1995
(73) Titulaire: Bosch Systemes de Freinage, 93700 Drancy (FR)
(72) Inventeur: CASTEL, Philippe, F-75005 Paris (FR); KERVAGORET, Gilbert, F-95100 Argenteuil (FR)
(74) Mandataire: Bentz, Jean-Paul
(86) Numéro de dépôt international: FR9400060
(87) Numéro de publication internationale: WO9418044

(56) Documents cités:
- EP-A- 0 447 750
- EP-A- 0 514 238
- DE-A- 3 038 797
- DE-A- 3 240 276
- US-A- 3 605 813

## Description

La présente invention concerne une électrovalve pneumatique comprenant : au moins deux voies incluant une première entrée reliée à une première source de pression délivrant une pression relativement haute et une sortie reliée à une chambre à pression contrôlée un corps creux dans lequel débouche chacune des voies pour y être mise en communication de façon sélective avec au moins une autre voie; un électro-aimant solidaire du corps et comportant un noyau susceptible d'actionner des moyens propres à établir ladite communication sélective ; et une seconde entrée reliée à une seconde source de pression délivrant une pression relativement basse, la seconde entrée étant disposée au-delà de la première entrée par rapport à la sortie et les moyens propres à établir la communication sélective comprenant :
- un clapet fixe et un clapet mobile logés dans le corps creux, le clapet fixe étant susceptible d'être ouvert quand le clapet mobile est fermé et inversement ;
- une cheminée formée à l'intérieur du corps creux suivant un axe dans le prolongement de la sortie et portant un premier élément de clapet de forme annulaire tourné vers cette sortie, s'étendant dans un plan sensiblement perpendiculaire à l'axe, et destiné à coopérer avec un second élément de clapet pour former avec lui ledit clapet fixe ;
- un troisième élément de clapet formé à la périphérie d'une surface étanche et susceptible d'être déplacé par le noyau de l'électro-aimant, suivant l'axe et vers la sortie pour coopérer avec un quatrième élément de clapet et constituer avec lui ledit clapet mobile ce troisième élément de clapet s'étendant dans un plan distant du clapet fixe et sensiblement perpendiculaire à l'axe et ;
- un organe d'obturation tubulaire et mobile dont une première extrémité porte ledit second élément de clapet et dont une seconde extrémité porte ledit quatrième élément de clapet le second élément de clapet étant sollicité en direction du premier élément de clapet au moins par un ressort de rappel vers une position de fermeture du clapet fixe dans laquelle ce dernier, la cheminée et l'organe d'obturation interdisent ensemble toute communication entre la première entrée et la sortie tout en permettant en l'absence d'actionnement de l'électro-aimant une communication entre la seconde entrée et la sortie à travers le clapet mobile et le troisième élément de clapet étant sollicité, par actionnement de l'électro-aimant, en direction du quatrième élément de clapet dans une position de fermeture du clapet mobile dans laquelle ce dernier et la surface étanche interdisent toute communication entre la seconde entrée et la sortie tout en permettant, au moins pour une force d'actionnement minimale prédéterminée de l'électro-aimant, une communication entre la première entrée et la sortie à travers le clapet fixe cet organe d'obturation interdisant dans toute position toute communication entre les deux entrées.

Des électrovalves de ce type sont connues de l'homme de l'art pour faire communiquer une chambre à pression contrôlée avec une source de pression, et par exemple illustrées dans le brevet DE-A-3 038 797.

Dans la mesure où de telles électrovalves sont susceptibles de trouver application dans des systèmes de freinage, lesquels sont produits en grande série et soumis à des contraintes très sévères de coût de fabrication, un but de l'invention est de proposer une électrovalve permettant de réguler la pression dans une chambre en fonction d'un signal électrique, et dont néanmoins la structure reste suffisamment simple pour que la fabrication soit aisée et relativement peu coûteuse.

A cette fin, l'électrovalve de l'invention est essentiellement caractérisée en ce que ladite surface étanche présente une zone centrale axialement éloignée de la périphérie de cette surface en direction de la sortie et formant une concavité tournée vers l'électro-aimant en ce que cette surface étanche est sollicitée vers l'électro-aimant par une force élastique agissant sur sa périphérie, et en ce que le noyau de l'électro-aimant agit sur une première extrémité d'une tige de poussée dont une seconde extrémité appuie sur l'intérieur de ladite concavité sans contrainte d'alignement relatif.

D'autres caractéristiques et avantages de l'invention ressortiront clairement de la description qui en est faite ci-après, à titre indicatif et nullement limitatif, en référence aux dessins annexés, sur lesquels :

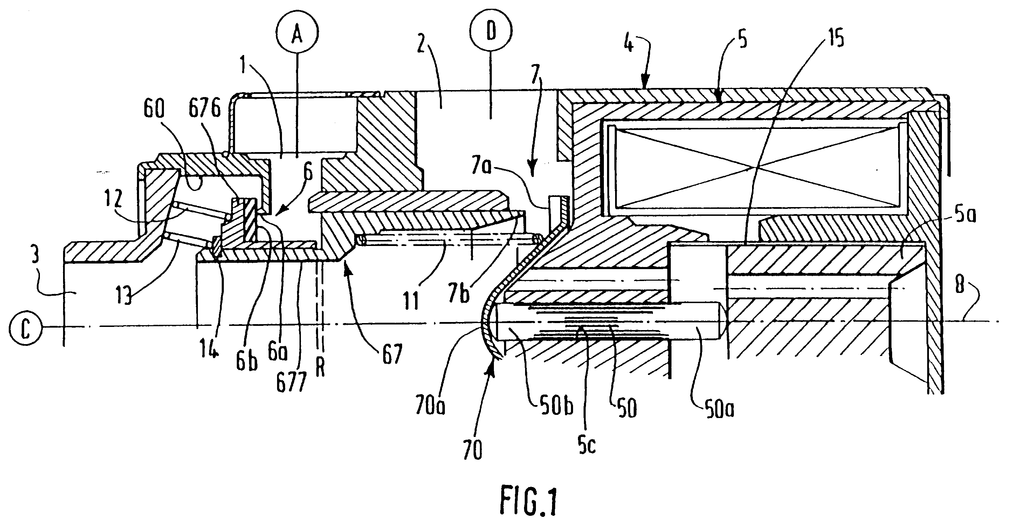

- La Figure 1 est une vue en coupe d'une électrovalve conforme à de l'invention.

L'électrovalve pneumatique de l'invention comporte trois voies 1, 2 et 3 et comprend plus précisément, comme le montre la figure : un corps creux essentiellement cylindrique 4 dans lequel débouche chacune des trois voies pour y être mise en communication de façon sélective avec au moins une autre voie; une première entrée 1, constituant la première voie, reliée à une première source de pression par exemple constituée par l'atmosphère A; une seconde entrée 2 constituant la seconde voie, reliée à une seconde source de pression dont la pression est inférieure à celle de la première source et qui est par exemple constituée par une source de dépression D; une sortie 3 constituant la troisième voie, disposée au-delà de la première entrée 1 par rapport à la seconde entrée 2 et reliée à une chambre à pression contrôlée C; et un électro-aimant 5 solidaire du corps et comportant un noyau 5a susceptible d'actionner des moyens propres à établir la communication sélective entre les trois voies.

Les moyens propres à établir la communication sélective entre les trois voies 1, 2, et 3 comprennent eux-mêmes :
- un clapet fixe 6 et un clapet mobile 7 tous les deux logés dans le corps creux 1, le clapet fixe étant susceptible d'être ouvert quand le clapet mobile est fermé et inversement ;
- une cheminée 60 formée à l'intérieur du corps creux suivant un axe 8 dans le prolongement de la sortie 3 et portant un premier élément de clapet 6a de forme annulaire tourné vers cette sortie, s'étendant dans un plan sensiblement perpendiculaire à l'axe 8, et destiné à coopérer avec un second élément de clapet 6b pour former avec lui le clapet fixe 6 ;
- un troisième élément de clapet 7a formé à la périphérie d'une surface étanche 70 et susceptible d'être déplacé par une tige telle que 5b actionnée par le noyau 5a de l'électro-aimant, suivant l'axe 8 et vers la sortie 3, pour coopérer avec un quatrième élément de clapet 7b et constituer avec lui le clapet mobile 7, ce troisième élément de clapet 7a s'étendant dans un plan distant du clapet fixe et sensiblement perpendiculaire à l'axe 8, et ;
- un organe d'obturation 67 tubulaire et mobile dont une première extrémité (gauche sur les figures) porte le second élément de clapet 6b et dont une seconde extrémité (droite sur les figures) porte le quatrième élément de clapet 7b.

Le second élément de clapet 6b est sollicité en direction du premier élément de clapet 6a, au moins par un ressort de rappel 9, vers une position de fermeture du clapet fixe dans laquelle ce dernier, la cheminée, et l'organe d'obturation interdisent ensemble toute communication entre la première entrée 1 et la sortie 3 tout en permettant, en l'absence d'actionnement de l'électro-aimant 5, une communication entre la seconde entrée 2 et la sortie 3 à travers le clapet mobile.

Par ailleurs, le troisième élément de clapet 7a est sollicité, par actionnement de l'électro-aimant, en direction du quatrième élément de clapet 7b dans une position de fermeture du clapet mobile 7 dans laquelle ce dernier et la surface étanche interdisent toute communication entre la seconde entrée 2 et la sortie 3 tout en permettant, au moins pour une force d'actionnement minimale prédéterminée de l'électro-aimant, une communication entre la première entrée 1 et la sortie 3 à travers le clapet fixe 6, l'organe d'obturation 67 interdisant dans toute position toute communication entre les deux entrées 1 et 2.

Selon une caractéristique avantageuse de l'invention, l'organe d'obturation tubulaire 67 définit avec le premier élément de clapet 6a d'une part et avec le troisième élément de clapet 7a d'autre part des surfaces d'application de pression d'aires sensiblement égales.

Par ailleurs, la sortie 3 et l'électro-aimant 5 sont situés sur l'axe 8, tandis que les deux entrées 1 et 2 débouchent sur la périphérie du corps creux 4, à distance de cet axe 8.

Selon un mode de réalisation de l'invention, la surface étanche 70 présente une zone centrale 70a axialement éloignée de la périphérie de cette surface en direction de la sortie 3 et formant une concavité tournée vers l'électro-aimant 5.

Cette surface étanche est sollicitée vers l'électro-aimant par un ressort 11 exerçant une force élastique appliquée sur sa périphérie, et le noyau de l'électro-aimant pousse sur une première extrémité libre 50a d'une tige de poussée 50 dont une seconde extrémité libre 50b appuie sur l'intérieur de la concavité de la surface 70 , chacune de ces extrémités étant libre de rotuler par rapport à la pièce contre laquelle elle est appuyée.

La tige 50, qui se trouve ainsi dégagée de toute contrainte d'alignement relatif, est guidée dans un alésage axial 5c de l'électro-aimant, et cet arrangement conduit à une réduction considérable des frottements et risques de blocage.

Le mode de réalisation représenté sur la figure 1 permet en outre de faire aisément en sorte que la distance entre le second élément de clapet 6b et le quatrième 7b soit variable, ce qui autorise un état intermédiaire de l'électrovalve dans lequel les clapets fixe et mobile restent tous les deux fermés pour une course non nulle R du noyau 5a de l'électro-aimant et procure à l'électrovalve une grande stabilité de fonctionnement.

A cette fin, par exemple, l'organe d'obturation 67 comprend des première et seconde parties tubulaires 676 et 677, sensiblement étanches l'une par rapport à l'autre, coulissant l'une par rapport à l'autre et par rapport au corps creux 4, et portant respectivement les second et quatrième éléments de clapet, 6b, 7b.

La seconde partie tubulaire 677 supporte le ressort 11 qui tend à l'éloigner de la surface étanche 70. Par ailleurs, les parties 676, 677 de l'organe d'obturation sont toutes deux élastiquement repoussées à distance de la sortie 3 et vers l'électro-aimant par des ressorts respectifs 12 et 13, une butée 14 limitant le mouvement relatif de ces parties tubulaires 676 et 677.

Enfin, comme le montre la figure 1, le noyau est avantageusement guidé dans un tube fin en acier inoxydable 15, permettant de réduire les frottements et l'usure.

En variante du mode de réalisation illustré à la figure 1, la course non nulle R peut être augmentée de telle sorte que la seconde partie tubulaire 677 ne puisse pas déplacer la première partie tubulaire 676, la valve fonctionnant alors en limiteur de pression.

## Revendications

1. Electrovalve pneumatique comprenant : au moins deux voies incluant une première entrée (1) reliée à une première source de pression (A) délivrant une pression relativement haute et une sortie (3) reliée à une chambre à pression contrôlée (C); un corps creux (4) dans lequel débouche chacune des voies pour y être mise en communication de façon sélective avec au moins une autre voie; un électro-aimant (5) solidaire du corps et comportant un noyau (5a) susceptible d'actionner des moyens propres à établir ladite communication sélective ; et une seconde entrée (2) reliée à une seconde source de pression (D), délivrant une pression relativement basse, la seconde entrée (2) étant disposée au-delà de la première entrée par rapport à la sortie et les moyens propres à établir la communication sélective comprenant :
- un clapet fixe (6) et un clapet mobile (7) logés dans le corps creux, le clapet fixe étant susceptible d'être ouvert quand le clapet mobile est fermé et inversement ;
- une cheminée (60) formée à l'intérieur du corps creux suivant un axe (8) dans le prolongement de la sortie et portant un premier élément de clapet (6a) de forme annulaire tourné vers cette sortie, s'étendant dans un plan sensiblement perpendiculaire à l'axe, et destiné à coopérer avec un second élément de clapet (6b) pour former avec lui ledit clapet fixe (6) ;
- un troisième élément de clapet (7a) formé à la périphérie d'une surface étanche (70) et susceptible d'être déplacé par le noyau (5a) de l'électro-aimant, suivant l'axe (8) et vers la sortie (3), pour coopérer avec un quatrième élément de clapet (7b) et constituer avec lui ledit clapet mobile (7), ce troisième élément de clapet (7a) s'étendant dans un plan distant du clapet fixe et sensiblement perpendiculaire à l'axe (8), et ;
- un organe d'obturation tubulaire et mobile (67) dont une première extrémité porte ledit second élément de clapet (6b) et dont une seconde extrémité porte ledit quatrième élément de clapet (7b), le second élément de clapet (6b) étant sollicité en direction du premier élément de clapet (6a), au moins par un ressort de rappel (9, 12), vers une position de fermeture du clapet fixe (6) dans laquelle ce dernier, la cheminée (60), et l'organe d'obturation (67) interdisent ensemble toute communication entre la première entrée (1) et la sortie (3) tout en permettant en l'absence d'actionnement de l'électro-aimant une communication entre la seconde entrée (2) et la sortie (3) à travers le clapet mobile (7), et le troisième élément de clapet (7a) étant sollicité, par actionnement de l'électro-aimant, en direction du quatrième élément de clapet (7b) dans une position de fermeture du clapet mobile (7) dans laquelle ce dernier et la surface étanche (70) interdisent toute communication entre la seconde entrée (2) et la sortie (3) tout en permettant, au moins pour une force d'actionnement minimale prédéterminée de l'électro-aimant, une communication entre la première entrée (1) et la sortie (3) à travers le clapet fixe (6), cet organe d'obturation (67) interdisant dans toute position toute communication entre les deux entrées,
caractérisée en ce que ladite surface étanche (70) présente une zone centrale (70a) axialement éloignée de la périphérie de cette surface en direction de la sortie (3) et formant une concavité tournée vers l'électro- aimant (5), en ce que cette surface étanche est sollicitée vers l'électro-aimant par une force élastique agissant sur sa périphérie, et en ce que le noyau (5a) de l'électro-aimant agit sur une première extrémité (50a) d'une tige de poussée (50) dont une seconde extrémité (50b) appuie sur l'intérieur de ladite concavité sans contrainte d'alignement relatif.

2. Electrovalve pneumatique suivant la revendication 1, caractérisée en ce que la distance entre le second et le quatrième élément de clapet (6b, 7b) est variable pour permettre un état intermédiaire de l'électrovalve dans lequel les clapets fixe et mobile (6, 7) restent tous les deux fermés pour une course non nulle (R) dudit noyau.

3. Electrovalve pneumatique suivant la revendication 2, caractérisée en ce que ledit organe d'obturation tubulaire (67) comprend des première et seconde parties tubulaires (676, 677), sensiblement étanches l'une par rapport à l'autre, coulissant l'une par rapport à l'autre et par rapport audit corps creux, et portant respectivement les second et quatrième éléments de clapet (6b, 7b).

4. Electrovalve pneumatique suivant la revendication 3, caractérisée en ce que ladite force élastique est exercée par un ressort (11) tendant à éloigner l'une de l'autre la seconde partie tubulaire (677) de l'organe d'obturation et ladite surface étanche (70).

5. Electrovalve pneumatique suivant l'une quelconque des revendications précédentes, caractérisée en ce que le noyau (5a) est guidé dans un tube (15) en acier inoxydable.

6. Electrovalve pneumatique suivant l'une quelconque des revendications 2 à 4, caractérisée en ce que ladite course non nulle (R) est telle que la seconde partie tubulaire (677) ne peut pas déplacer la première partie tubulaire (676).

## Claims

1. Pneumatic solenoid valve comprising : at least two paths including a first inlet (1) connected to a first pressure source (A) delivering a relatively high pressure, and an outlet (3) connected to a chamber at controlled pressure (C); a hollow body (4) into which there emerges each of the paths so as to be set in communication therein in a selective fashion, with at least one other path; and an electromagnet (5) secured to the body and including a core plunger (5a) capable of actuating means suitable for establishing said selective communication; and a second inlet (2) connected to a second pressure source (D), delivering a relatively low pressure, the second inlet (2) being located beyond the first inlet with respect to the outlet and the means suitable for establishing the selective communication comprising:
- a stationary valve (6) and a movable valve (7) housed in the hollow body, the stationary valve being capable of being open when the movable valve is closed, and vice-versa;
- a shaft (60) formed inside the hollow body along an axis (8) in the extension of the outlet and carrying a first valve element (6a) of annular shape pointing towards this outlet, extending in a plane which is substantially perpendicular to the axis, and intended to interact with a second valve element (6b) so as to form, together with it, said stationary valve (6);
- a third valve element (7a) formed at the periphery of a sealed surface (70) and capable of being displaced by the core plunger (5a) of the electromagnet, along the axis (8) and towards the outlet (3), so as to interact with a fourth valve element (7b) and to constitute with it said movable valve (7), this third valve element (7a) extending in a plane which is distant from the stationary valve and substantially perpendicular to the axis (8), and;
- a tubular and movable stopper member (67) a first end of which carries said second valve element (6b) and a second end of which carries said fourth valve element (7b), the second valve element (6b) being urged in the direction of the first valve element (6a) at least by a return spring (9, 12) towards a position for closing the stationary valve (6) in which the latter, the shaft (60), and the stopper member (67) together prevent any communication between the first inlet (1) and the outlet (3) whilst, in the absence of actuation of the electromagnet allowing a communication between the second inlet (2) and the outlet (3) through the movable valve (7) and, with the third valve element (7a) urged by actuation of the electromagnet, in the direction of the fourth valve element (7b) into a position for closing the movable valve (7) in which the latter and the sealed surface (70) prevent any communication between the second inlet (2) and the outlet (3) whilst allowing, at least for a minimum predetermined actuation force of the electromagnet, a communication between the first inlet (1) and the outlet (3) through the stationary valve (6), this stopper member (67) in any position preventing any communication between the two inlets,
characterized in that said sealed surface (70) has a central zone (70a) which is axially remote from the periphery of this surface in the direction of the outlet (3), and forming a concavity pointing towards the electromagnet (5), in that this sealed surface is urged towards the electromagnet by an elastic force acting on its periphery, and in that the core plunger (5a) of the electromagnet acts on a first end (50a) of a push rod (50), a second end (50b) of which bears on the inside of said concavity without relative alignment constraint.

2. Pneumatic solenoid valve according to Claim 1, characterized in that the distance between the second and the fourth valve element (6b, 7b) is variable so as to allow an intermediate state of the solenoid valve in which the stationary and movable valves (6, 7) both remain closed for a non-zero stroke (R) of said core plunger.

3. Pneumatic solenoid valve according to Claim 2, characterized in that said tubular stopper member (67) comprises first and second tubular parts (676, 677), which are substantially sealed with respect to each other, sliding with respect to each other and with respect to said hollow body, and respectively carrying the second and fourth valve elements (6b, 7b).

4. Pneumatic solenoid valve according to Claims 3, characterized in that said elastic force is exerted by a spring (11) tending to move the second tubular part (677) of the stopper member and said sealed surface (70) away from each other.

5. Pneumatic solenoid valve according to any one of the preceding claims, characterized in that the core plunger (5a) is guided in a stainless steel tube (15).

6. Pneumatic solenoid valve according to any one of Claims 2 to 4, characterized in that said non-zero stroke (R) is such that the second tubular part (677) cannot move the first tubular part (676).

## Patentansprüche

1. Pneumatisches Elektroventil mit wenigstens zwei Wegen, die einen ersten Eingang (1), der mit einer ersten einen relativ hohen Druck liefernden Druckquelle (A) verbunden ist, und einen Ausgang (3) aufweisen, der mit einer Kammer (C) von gesteuertem Druck verbunden ist, sowie einem hohlen Körper (4), in den jeder der Wege mündet, um dort in selektiver Weise mit wenigstens einem anderen Weg verbunden zu werden, einem Elektromagneten (5), der fest mit dem Körper verbunden ist und einen Kern (5a) aufweist, der Mittel betätigen kann, die zum Herstellen der selektiven Verbindung geeignet sind, und einem zweiten Eingang (2), der mit einer zweiten einen relativ niedrigen Druck liefernden Druckquelle (D) verbunden ist, wobei der zweite Eingang (2) bezüglich des Ausgangs jenseits des ersten Eingangs angeordnet ist, und wobei die Mittel, die zum Herstellen der selektiven Verbindung geeignet sind, folgendes enthalten:
- ein feststehendes Ventil (6) und ein bewegliches Ventil (7) aufweisen, die in dem hohlen Körper angeordnet sind, wobei das feststehende Ventil geöffnet werden kann, wenn das bewegliche Ventil geschlossen ist, und umgekehrt,
- einen Kanal (60), der im Inneren des hohlen Körpers entlang einer Achse (8) in der Verlängerung des Ausgangs gebildet ist und ein erstes Ventilelement (6a) trägt, das eine ringförmige Gestalt hat, zu diesem Ausgang gerichtet ist, sich in einer zur Achse im wesentlichen senkrechten Ebene erstreckt und das dafür vorgesehen ist, mit einem zweiten Ventilelement (6b) zusammenzuwirken, um mit diesem das feststehende Ventil (6) zu bilden;
- ein drittes Ventilelement (7a), das an dem Umfang einer dichten Fläche (70) gebildet ist und von dem Kern (5a) des Elektromagneten entlang der Achse (8) und zu dem Ausgang (3) verstellt werden kann, um mit einem vierten Ventilelement (7b) zusammenzuwirken und mit diesem das bewegliche Ventil (7) zu bilden, wobei das dritte Ventilelement (7a) sich in einer Ebene erstreckt, die von dem feststehenden Ventil entfernt und im wesentlichen senkrecht zur Achse (8) ist, und
- ein rohrförmiges und bewegliches Verschlußorgan (67), von dem ein erstes Ende das zweite Ventilelement (6b) trägt und von dem ein zweites Ende das vierte Ventilelement (7b) trägt, wobei das zweite Ventilelement (6b) in Richtung des ersten Ventilelementes (6a) durch wenigstens eine Rückstellfeder (9, 12) in eine Stellung des Verschließens des feststehenden Ventils (6) beaufschlagt ist, in der dieses, der Kanal (60) und das Verschlußorgan (67) zusammen jede Verbindung zwischen dem ersten Eingang (1) und dem Ausgang (3) verhindern, während gleichzeitig beim Fehlen einer Betätigung des Elektromagneten eine Verbindung zwischen dem zweiten Eingang (2) und dem Ausgang (3) über das bewegliche Ventil (7) möglich ist, und wobei das dritte Ventilelement (7a) durch Betätigung des Elektromagneten in Richtung des vierten Ventilelementes (7b) in eine Stellung des Verschließens des beweglichen Ventils (7) beaufschlagt ist, in der dieses und die dichte Fläche (70) jede Verbindung zwischen dem zweiten Eingang (2) und dem Ausgang (3) verhindern, während gleichzeitig für wenigstens eine vorbestimmte minimale Betätigungskraft des Elektromagneten eine Verbindung zwischen dem ersten Eingang (1) und dem Ausgang (3) über das feststehende Ventil (6) möglich ist, wobei dieses Verschlußorgan (67) in allen Stellungen jede Verbindung zwischen den beiden Eingängen verhindert,
dadurch gekennzeichnet, daß die dichte Fläche (70) eine Mittelzone (70a) aufweist, die von dem Umfang dieser Fläche in Richtung des Ausgangs (3) axial entfernt ist und eine zu dem Elektromagneten (5) gerichtete Konkavität bildet, daß diese dichte Fläche durch eine auf ihren Umfang einwirkende elastische Kraft zum Elektromagneten beaufschlagt ist und daß der Kern (5a) des Elektromagneten auf ein erstes Ende (50a) einer Schubstange (50) einwirkt, deren zweites Ende (50b) sich an der Innenseite der Konkavität ohne Einschränkungen der Relativausrichtung abstützt.

2. Pneumatisches Elektroventil nach Anspruch 1, dadurch gekennzeichnet, daß der Abstand zwischen dem zweiten und dem vierten Ventilelement (6b, 7b) variabel ist, um einen Zwischenzustand des Elektroventils zu ermöglichen, in dem sowohl das feststehende als auch das bewegliche Ventil (6, 7) für einen von Null verschiedenen Weg (R) des Kerns geschlossen bleiben.

3. Pneumatisches Elektroventil nach Anspruch 2, dadurch gekennzeichnet, daß das rohrförmige Verschlußorgan (67) einen ersten und einen zweiten rohrförmigen Abschnitt (676, 677) aufweist, die relativ zueinander im wesentlichen dicht sind, relativ zueinander und bezüglich des hohlen Körpers verschiebbar sind und das zweite bzw. das vierte Ventilelement (6b bzw. 7b) tragen.

4. Pneumatisches Elektroventil nach den Anspruch 3, dadurch gekennzeichnet, daß die elastische Kraft durch eine Feder (11) ausgeübt wird, die den zweiten rohrförmigen Abschnitt (677) des Verschlußorgans und die dichte Fläche (70) voneinander zu entfernen sucht.

5. Pneumatisches Elektroventil nach einem der vorhergehenden Ansprüche, dadurch gekennzeichnet, daß der Kern (5a) in einem Rohr (15) aus nichtrostendem Stahl geführt ist.

6. Pneumatisches Elektroventil nach einem der Ansprüche 2 bis 4, dadurch gekennzeichnet, daß der von Null verschiedene Weg (R) ein solcher ist, daß der zweite rohrförmige Abschnitt (677) den ersten rohrförmigen Abschnitt (676) nicht verstellen kann.
